# EUROPÄISCHE PATENTSCHRIFT

(11) **EP 1 908 654 B1**
(45) Veröffentlichungstag und Bekanntmachung des Hinweises auf die Patenterteilung: **09.06.2010**
(21) Anmeldenummer: 07117611.9
(22) Anmeldetag: 01.10.2007
(51) Int. Cl.: B60S 1/34

(54) **Scheibenwischervorrichtung**
Windscreen wiper device
Dispositif d'essuie-glaces

(30) Priorität: 04.10.2006 DE 102006046914; 03.08.2007 DE 102007036785
(43) Veröffentlichungstag der Anmeldung: 09.04.2008
(73) Patentinhaber: ROBERT BOSCH GMBH, 70442 Stuttgart (DE)
(72) Erfinder: Volz, Heiko, 76135 Karlsruhe (DE); Kruse, Michael, 77815 Buehl (DE)

(56) Entgegenhaltungen:
- DE-A1- 10 026 819
- FR-A- 2 772 326
- FR-A- 2 877 627
- JP-A- 7 186 890

## Beschreibung

Die vorliegende Erfindung betrifft eine Scheibenwischervorrichtung, insbesondere zum Reinigen von Kraftfahrzeug-Windschutzscheiben.

### Stand der Technik

Eine stets gute Sicht durch die Windschutzscheibe ist für das sichere Führen eines Kraftfahrzeugs für den Fahrer von sehr großer Bedeutung. Dabei spielt zum einen die Qualität der Wischblattlippe eine große Rolle, zum anderen aber auch der Winkel, unter welchem die Wischblattlippe zu der Windschutzscheibenoberfläche steht, d.h. der so genannte Normalenfehler. Dabei sollte für eine relativ effektive Reinigung der Windschutzscheibe durch den Scheibenwischer der Normalenfehler einige Grad betragen, d.h. die Wischblattlippe sollte leicht schräg zur Windschutzscheibenoberflächennormale angeordnet sein, damit der auf die Windschutzscheibe ausgeübte Anpressdruck der Wischblattlippe über ihre gesamte Länge möglichst gleichmäßig ist.

Eine Schrägstellung der Wischblattlippe zur Windschutzscheibenoberfläche kann zum einen durch ein Schrägstellen des Wischerantriebs bzw. der Wischerantriebswelle bezüglich der Fahrzeugkarosserie erzielt werden. Bedingt durch Fertigungs- und Einbautoleranzen kann jedoch ein gleich bleibender Normalenfehler oftmals nicht erreicht werden.

Die Druckschrift DE 100 26 819 A1 beschreibt eine Scheibenwischervorrichtung in einer Viergelenkwischhebelanordnung, mittels der der Normalenfehler des Scheibenwischers bequem in einer Parklage des Scheibenwischers eingestellt werden kann.

Aus der FR-A-2 887 627 ist eine Scheibenwischvorrichtung mit den Merkmalen des Obergriffs des Anspruchs 1 bekannt.

### Offenbarung der Erfindung

Bei den herkömmlichen Scheibenwischervorrichtungen hat sich jedoch als nachteilig herausgestellt, dass auf Windschutzscheiben, die relativ stark gekrümmt sind, d.h. insbesondere in Y-Richtung, also quer zur Fahrzeuglängsachse, nur relativ schlechte Wischergebnisse erzielt werden. Dies liegt daran, dass durch die relativ hohe Krümmung der Windschutzscheibe die Schrägstellung der Wischblattlippe zur Windschutzscheibenoberfläche nicht ausreichend konstant bleibt, d.h. der Anpressdruck nimmt mit zunehmender Krümmung der Windschutzscheibe ab, so dass die Windschutzscheibe in den äußeren Bereichen nur unzureichend oder gar nicht gereinigt wird.

### Offenbarung der Erfindung

### Technische Aufgabe

Es ist deshalb eine Aufgabe der vorliegenden Erfindung, die Nachteile des Standes der Technik zu umgehen, und eine verbesserte Scheibenwischervorrichtung bereitzustellen.

Diese Aufgabe wird durch die Merkmale des Hauptanspruchs gelöst.

### Technische Lösung

Hierzu schlägt die Erfindung eine Scheibenwischervorrichtung vor, umfassend:
einen Wischerantrieb mit einer Wischerantriebswelle; einen drehfest radial auf der Wischerantriebswelle angeordneten Wischhebel, welcher mittels des Wischerantriebs Schwenkbewegungen um die Wischerantriebswelle ausführt; und
eine Getriebevorrichtung, welche mit dem Wischhebel verbunden ist, wobei die Getriebevorrichtung über mit der Wischerantriebswelle in Beziehung stehende Antriebselemente steuerbar ist, und zwar derart, dass der Wischhebel beziehungsweise ein mit dem Wischhebel verbundenes Wischblattbefestigungselement um eine Wischhebel-Längsachse kippbar ist.

### Vorteilhafte Wirkungen

Durch die Möglichkeit der Steuerung der Verkippung des Wischblatts relativ zur Windschutzscheibenoberfläche mit Hilfe der Antriebselemente kann der Normalenfehler während des Betriebs des Scheibenwischers an die Krümmung der Windschutzscheibe angepasst werden, so dass der Normalenfehler bzw. der Anpressdruck des Wischblatts bei jeder Stellung des Scheibenwischers um seine Antriebsachse gleich ist. In der Folge wird ein gleichmäßiges Reinigen der Windschutzscheibe über den gesamten von dem Scheibenwischer abgedeckten Bereich erzielt.

In der Erfindung umfassen die Antriebselemente einen ersten Steuerhebel, welcher im Wesentlichen parallel zum Wischhebel verläuft, einen zweiten Steuerhebel, welcher einerseits an dem von der Wischerantriebswelle des Wischhebels entfernten Ende des ersten Steuerhebels angelenkt ist, und andererseits mit der Getriebevorrichtung in Wirkverbindung steht, einen dritten Steuerhebel, welcher einerseits an dem der Wischerantriebswelle des Wischhebels zugewandten Ende des ersten Steuerhebels angelenkt ist, und andererseits mit dem Wischerantrieb in Wirkverbindung steht.
Dabei ist die Getriebevorrichtung mittels der von dem Wischerantrieb angetriebenen Steuerhebel derart ansteuerbar, dass das mit dem Wischhebel verbundene Wischblattbefestigungselement um die Wischhebel-Längsachse kippbar ist. In einer Ausführungsform den Erfindung umfasst die Getriebevorrichtung ein Schneckengetriebe , mittels welchem Bewegungen des zweiten Steuerhebels derart umwandelbar sind, dass der Wischhebel beziehungsweise das mit dem Wischhebel verbundene Wischblattbefestigungselement um die Wischhebel-Längsachse kippbar ist.

Durch diese Anordnung der Steuerhebel in der Art eines Viergelenks wird auf einfache und vorteilhafte Weise eine translatorische Bewegung, nämlich die Bewegung der Steuerhebel, mittels des Schneckengetriebes in eine Kippbewegung des Wischblattbefestigungselements umgewandelt.

In einer weiteren Ausführungsform der Erfindung ist die Getriebevorrichtung radial auf der Wischerantriebswelle angeordnet, und der Wischhebel ist derart mit der Getriebevorrichtung verbunden, so dass der Wischhebel um seine Längsachse kippbar ist.

Hierbei ist von Vorteil, dass die Kippbewegung - ohne Umwandlung einer translatorischen Bewegung in eine Kippbewegung - in noch einfacherer Weise direkt unter Ausnutzung einer rotatorischen Bewegung erzeugt wird.

Vorteilhafterweise umfassen dabei die Antriebselemente ein Schneckenrad, welches entweder in Wirkverbindung mit dem Wischerantrieb oder in Wirkverbindung mit einem separaten Antrieb steht, und wobei das Schneckenrad in ein Schneckengetriebe eingreift, welches axial mit dem Wischhebel verbunden ist. Das Schneckengetriebe wiederum ist im Wesentlichen direkt mit dem Wischhebel bzw. dem Wischblattbefestigungselement verbunden, so dass der Wischhebel bzw. das mit dem Wischhebel verbundene Wischblattbefestigungselement um die Wischhebel-Längsachse kippbar ist.

### Kurze Beschreibung der Zeichnungen

Nachfolgend wird die Erfindung anhand von Figuren näher erläutert. Hierbei zeigt:
Figur 1 eine perspektivische schematische Darstellung einer ersten Ausführungsform der erfindungsgemäßen Scheibenwischervorrichtung;
Figur 2 eine detaillierte Darstellung einer Getriebevorrichtung des in Figur 1 dargestellten Scheibenwischers; und
Figur 3 eine detaillierte Darstellung einer Getriebevorrichtung einer zweiten Ausführungsform der erfindungsgemäßen Scheibenwischervorrichtung.

### Ausführungsformen der Erfindung

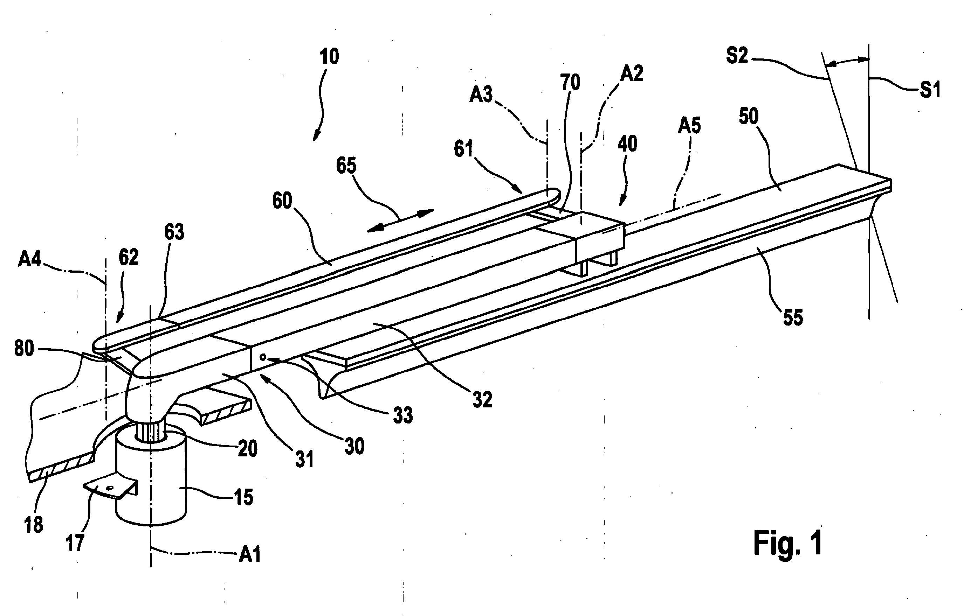

Figur 1 zeigt eine schematische Darstellung einer ersten Ausführungsform einer Scheibenwischervorrichtung 10 der Erfindung.

Die Scheibenwischervorrichtung 10 umfasst einen Wischerantrieb 15 mit einer Wischerantriebswelle 20. Der Wischerantrieb 15 wird im dargestellten Beispiel über einen Flansch 17 an der Fahrzeugkarosserie 18 angeflanscht. Es sind jedoch auch andere Möglichkeiten der Befestigung des Wischerantriebs 15 an der Fahrzeugkarosserie denkbar.

An der Wischerantriebswelle 20 ist ein Wischhebel 30 drehfest befestigt. Der Wischhebel 30 umfasst ein Kopfstück 31 und ein Mittelstück 32, wobei das Mittelstück 32 über ein Scharnier 33 gegenüber dem Kopfstück 31 abgeklappt werden kann, um den Wischhebel auf eine Windschutzscheibe vorzuspannen oder um z.B. freien Zugang zu einer hier nicht dargestellten Windschutzscheibe zu haben.

Der Wischhebel 30 ist an seinem von der Wischerantriebswelle 20 abgewandten Ende mit einer Getriebevorrichtung 40 verbunden. Mit der Getriebevorrichtung 40 verbunden ist ein Wischblattbefestigungselement 50, welches zur Aufnahme eines herkömmlichen Wischblatts 55 ausgebildet ist. Das Wischblatt 55 kann z.B. auf der Windschutzscheibe aufliegen.

Im Wesentlichen parallel zum Wischhebel 30 verläuft ein erster Steuerhebel 60, an dessen einem Ende 61 ein zweiter Steuerhebel 70 mit einem Ende um eine Achse A2 angelenkt ist, wobei das andere Ende des zweiten Steuerhebels 70 an der Getriebevorrichtung 40 um eine Achse A3 angelenkt ist und somit mit der Getriebevorrichtung 40 in Wirkverbindung steht. Der erste Steuerhebel 60 ist über ein Scharnier 63 im gleichen Sinne klappbar wie der Wischhebel 30.

Am anderen Ende 62 des ersten Steuerhebels 60 ist ein dritter Steuerhebel 80 mit einem Ende um eine Achse A4 angelenkt, wobei das andere Ende des dritten Steuerhebels 80 an der Wischerantriebswelle 20 um eine Achse A1 angelenkt ist und somit mit der Wischerantriebswelle 20 in Wirkverbindung steht.

Wird der Wischerantrieb 15 in Betrieb gesetzt, dann dreht sich dessen Wischerantriebswelle 20 um die Achse A1. Da der Wischhebel 30 drehfest mit der Wischerantriebswelle 20 verbunden ist, wird der Wischhebel 30 mit der Getriebevorrichtung 40 um die Achse A1 geschwenkt. Die Steuerhebel 60, 70 und 80 schwenken mit dem Wischhebel 30 mit, da diese mit ihm bzw. der Getriebevorrichtung 40 verbunden sind.

Der dritte Steuerhebel 80 ist unabhängig von der Wischerantriebswelle 20 gelagert oder der dritte Steuerhebel 80 steht über ein Getriebe mit der Wischerantriebswelle 20 in Wirkverbindung, d.h. ist nicht starr mit der Wischerantriebswelle 20 verbunden. Somit führt der dritte Steuerhebel 80 eine zusätzliche Schwenkbewegung um die Achse A1 aus, wenn sich die Wischerantriebswelle 20 dreht. Die Schwenkbewegung kann mittels eines hier nicht dargestellten von der Antriebswelle 20 angetriebenen Getriebes oder auch durch einen eigenen Antrieb erfolgen, so dass der erste Steuerhebel 60 bei einer Wischbewegung d. h. beim Drehen der Wischerantriebswelle, eine im Wesentlichen translatorische Bewegung ausführt, was durch einen Doppelpfeil 65 dargestellt ist. Während also der Wischhebel 30 um die Achse A1 schwenkt, führt die Anordnung bestehend aus dem ersten Steuerhebel 60, dem zweiten Steuerhebel 70 und dem dritten Steuerhebel 80 relativ zu dem Wischhebel 30 eine Viergelenk-artige Bewegung aus. Dadurch, dass nun der zweite Steuerhebel 70 die Getriebevorrichtung 40 ansteuert, kann dass Wischblattbefestigungselement 50 mit dem Wischblatt 55 um die Wischhebel-Längsachse A5 gekippt werden, so dass das Wischblatt 55 bezüglich der Windschutzscheibenoberfläche (nicht dargestellt) eine von der senkrecht zu der Oberfläche stehenden Position S1 abweichende - gekippte - Position S2 einnehmen kann, um die oben beschriebenen Vorteile, nämlich einen gleichmäßigen Anpressdruck auch bei relativ stark gekrümmten Windschutzscheibenoberflächen, zu erzielen.

In einer weiteren Ausführung kann auf den dritten Steuerhebel 80 verzichtet werden, und der erste Steuerhebel 60 kann z. B. in der Achse A4 drehbar an einem Lager beispielsweise der Karosserie befestigt sein.

Wie die Kippung des Wischblattbefestigungselements 50 mittels der Getriebevorrichtung 40 erzielt wird, wird im Folgenden beschrieben.

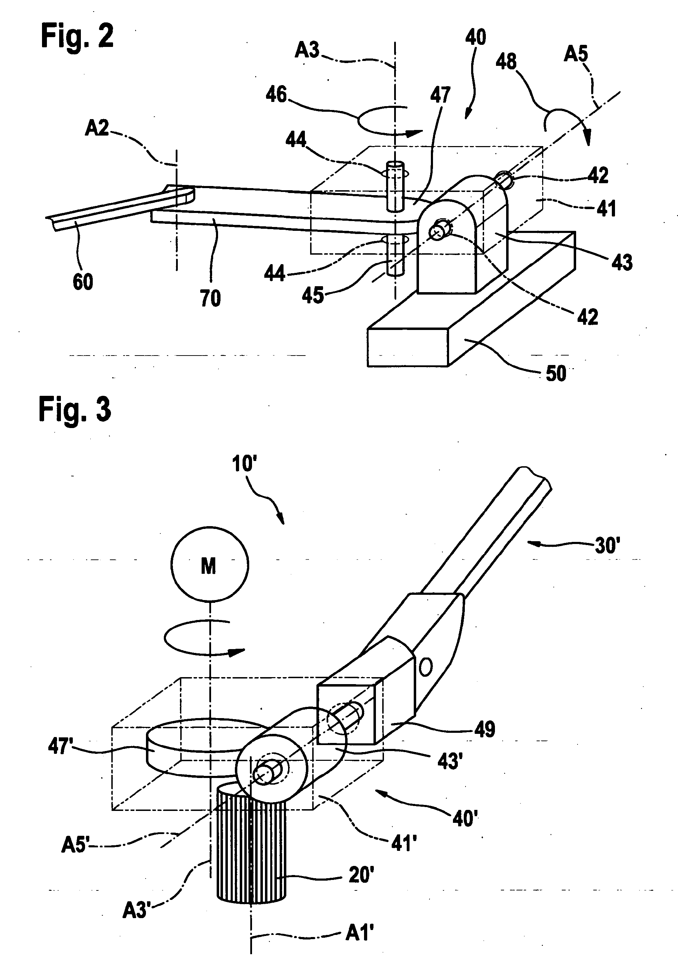

Figur 2 zeigt schematisch die Getriebevorrichtung 40, die im Wesentlichen aus einem Gehäuse 41, einer mit dem Gehäuse 41 verbundenen Lagerung 42 für ein Schneckengetriebe 43, und einer mit dem Gehäuse 41 verbundenen Lagerung 44 für eine Achswelle 45 besteht. In der Figur 2 ebenfalls dargestellt ist der erste Steuerhebel 60 sowie der zweite Steuerhebel 70, die zusammen um die Achse A2 angelenkt sind. Der zweite Steuerhebel 70 ist in der Getriebevorrichtung 40 an der in den Lagern 44, 44 gelagerten Achswelle 45 angelenkt, wobei der kreisförmige Pfeil 46 die Möglichkeit der Verschwenkung des zweiten Steuerhebels 70 um die Achse A3 andeuten soll. An dem der Achswelle 45 zugewandten Ende des zweiten Steuerhebels 70 ist der Steuerhebel 70 mit einem Schneckenrad 47 ausgebildet, welches in Eingriff mit dem Schneckengetriebe 43 steht. Durch die Schwenkbewegung des zweiten Steuerhebels 70 wird das Schneckengetriebe 43 in seinen Lagern 42, 42 um die Achse A5 gedreht, was durch einen kreisförmigen Pfeil 48 angedeutet sein soll.

Das Schneckengetriebe 43 ist starr mit dem hier nur schematisch dargestellten Wischblattbefestigungselement 50 verbunden, so dass bei einer Ansteuerung des Schneckengetriebes 43 durch das Schneckenrad 47 des zweiten Steuerhebels 70 das Wischblattbefestigungselement 50 in kontrollierter Weise um die Achse A5 gekippt werden kann, um den gewünschten Normalenfehler einzustellen.

In Figur 3 ist eine weitere Ausführungsform einer Scheibenwischervorrichtung 10' dargestellt, wobei hier nur die für das Erläutern des Verkippens des Wischhebels bzw. Wischblattbefestigungselements notwendigen Teile dargestellt sind. Es werden jeweils die in Figuren 1 und 2 verwendeten Bezugszeichen mit einem Beistrich verwendet, um anzudeuten, dass es sich jeweils um gleiche Komponenten handelt.

Figur 3 zeigt also eine um eine Achse A1' drehbare Wischerantriebswelle 20' (auf die Darstellung eines Wischerantriebs wurde hier verzichtet), welche drehfest mit einer Getriebevorrichtung 40' bzw. dessen Gehäuse 41' verbunden ist. In dem Gehäuse 41' ist wie im obigen Beispiel ein quer zur Achse A1' gelagertes Schneckengetriebe 43' angeordnet (die Lager sind hier nicht dargestellt), wobei das Schneckengetriebe 43' über ein Gelenkteil 49 direkt mit dem Wischhebel 30' verbunden ist. An dem Wischhebel 30' ist ein Wischblattbefestigungselement angebracht, jedoch kann ein entsprechendes Wischblatt auch direkt mit dem Wischhebel 30' verbunden sein.

In dieser Ausführungsform wird das Schneckengetriebe 43' von einem in das Schneckengetriebe eingreifenden Schneckenrad 47' angetrieben, welches selber im dargestellten Beispiel in Figur 3 von einem Stellmotor M angetrieben wird. Es ist jedoch auch denkbar, dass das Schneckenrad 47' mittels eines von der Antriebswelle 20' angetriebenen Getriebes angesteuert wird.

Wird das Schneckenrad 47' um seine Achse A3' geschwenkt, dann treibt das Schneckenrad 47' das Schneckengetriebe 43' an, welches sich um seine Achse A5' dreht, und dadurch den Wischhebel 30' mittels des mit dem Schneckengetriebe verbundenen Gelenkteils 49 auch um die Achse A5' schwenkt bzw. kippt. Auf diese Weise wird eine Änderung des Normalenfehlers des Wischblatts relativ zur Scheibenoberfläche erzielt.

An Stelle der oben beschriebenen Hebelanordnung ist es auch denkbar, entsprechend ausgebildete Riemen zu verwenden.

## Patentansprüche

1. Scheibenwischervorrichtung (10; 10'), umfassend:
- einen Wischerantrieb (15) mit einer Wischerantriebswelle (20; 20');
- einen drehfest mit der Wischerantriebswelle (20; 20') verbundenen Wischhebel (30; 30'), welcher mittels des Wischerantriebs (15) Schwenkbewegungen um die Wischerantriebswelle (20; 20') ausführt; und
- eine Vorrichtung , insbesondere eine Getriebevorrichtung (40; 40'), welche mit dem Wischhebel (30; 30') verbunden ist, wobei die Vorrichtung (40; 40') über mit der Wischerantriebswelle (20; 20') in Beziehung stehende Antriebselemente derart steuerbar ist, dass der Wischhebel (30; 30') beziehungsweise ein mit dem Wischhebel (30; 30') verbundenes Wischblattbefestigungselement (50) um eine Wischhebel-Längsachse (A5; A5') kippbar ist,
- einen ersten Steuerhebel (60), welcher im Weslutlichen parallel um Wischhebel (30) verläult;
**gekennzeichnet durch**
- einen zweiten Steuerhebel (70), welcher einerseits an dem von der Wischerantriebswelle (20) des Wischhebels (30) entfernten Ende des ersten Steuerhebels (60) angelenkt ist, und andererseits mit der Vorrichtung (40) in Wirkverbindung steht;
- einen dritten Steuerhebel (80), welcher einerseits an dem der Wischerantriebswelle (20) des Wischhebels (30) zugewandten Ende des ersten Steuerhebels (60) angelenkt ist; und
wobei die Vorrichtung (40) mittels der von dem Wischerantrieb (15) angetriebenen Steuerhebel (60, 70, 80) derart ansteuerbar ist, dass das mit dem Wischhebel (30) verbundene Wischblattbefestigungselement (50) um die Wischhebel-Längsachse (A5) kippbar ist.

2. Scheibenwischervorrichtung nach Anspruch 1, wobei die Vorrichtung (40) ein Schneckengetriebe (43) umfasst, mittels welchem Bewegungen des zweiten Steuerhebels (70) derart umwandelbar sind, dass der Wischhebel (30) beziehungsweise das mit dem Wischhebel (30) verbundene Wischblattbefesfigungselement (50) um die Wischhebel-Längsachse (A5) kippbar ist.

3. Scheibenwischervorrichtung (10') nach Anspruch 1, wobei die Vorrichtung (40') radial auf der Wischerantriebswelle (20') angeordnet ist, und der Wischhebel (30') derart mit der Getriebevorrichtung (40') verbunden ist, so dass der Wischhebel (30') um seine Längsachse (A5') kippbar ist.

4. Scheibenwischervorrichtung (10') nach Anspruch 3, wobei die Antriebselemente ein Schneckenrad (47') umfassen, welches entweder in Wirkverbindung mit der Wischerantriebswelle (20') oder in Wirkverbindung mit einem separaten Antrieb (M) steht, und wobei das Schneckenrad (47') in ein Schneckengetriebe (43') eingreift, welches axial mit dem Wischhebel (30') über ein Gelenkteil (49) verbunden ist.

5. Scheibenwischervorrichtung (10; 10') nach einem der Ansprüche 1 bis 4, wobei die Vorrichtung (40; 40') ein Schneckengetriebe (43; 43') umfasst, mittels welchem Bewegungen der Antriebselemente derart umwandelbar sind, dass der Wischhebel (30; 30') beziehungsweise das mit dem Wischhebel verbundene Wischblattbefestigungselement um die Wischhebel-Längsachse (A5; A5') kippbar ist.

## Claims

1. Windscreen wiper device (10; 10'), comprising:
- a wiper drive (15) with a wiper drive shaft (20; 20');
- a wiper lever (30; 30') which is connected in a rotationally fixed manner to the wiper drive shaft (20; 20') and, by means of the wiper drive (15), executes pivoting movements about the wiper drive shaft (20; 20'); and
- a device, in particular a gearing device (40; 40'), which is connected to the wiper lever (30; 30'), wherein the device (40; 40') is controllable via driving elements, which are related to the wiper drive shaft (20; 20'), in such a manner that the wiper lever (30; 30') or a wiper blade fastening element (50) connected to the wiper lever (30; 30') is tiltable about a longitudinal axis (A5; A5') of the wiper lever,
- a first control lever (60) which runs substantially parallel to the wiper lever (30);
**characterized by**
- a second control lever (70) which is coupled on one side to that end of the first control lever (60) which is remote from the wiper drive shaft (20) of the wiper lever (30), and is operatively connected on the other side to the device (40);
- a third control lever (80) which is coupled on one side to that end of the first control lever (60) which faces the wiper drive shaft (20) of the wiper lever (30); and
the device (40) being activatable by means of the control lever (60, 70, 80), which is driven by the wiper drive (15), in such a manner that the wiper blade fastening element (50) which is connected to the wiper lever (30) is tiltable about the longitudinal axis (A5) of the wiper lever.

2. Windscreen wiper device according to Claim 1, wherein the device (40) comprises a worm gearing (43) by means of which movements of the second control lever (70) are convertible in such a manner that the wiper lever (30) or the wiper blade fastening element (50) connected to the wiper lever (30) is tiltable about the longitudinal axis (A5) of the wiper lever.

3. Windscreen wiper device (10') according to Claim 1, wherein the device (40') is arranged radially on the wiper drive shaft (20'), and the wiper lever (30') is connected to the gearing device (40') in such a manner that the wiper lever (30') is tiltable about its longitudinal axis (A5').

4. Windscreen wiper device (10') according to Claim 3, wherein the driving elements comprise a worm wheel (47') which is either operatively connected to the wiper drive shaft (20') or is operatively connected to a separate drive (M), and the worm wheel (47') engaging in a worm gearing (43') which is connected axially to the wiper lever (30') via an articulated part (49).

5. Windscreen wiper device (10; 10') according to one of Claims 1 to 4, wherein the device (40; 40') comprises a worm gearing (43; 43') by means of which movements of the driving elements are convertible in such a manner that the wiper lever (30; 30') or the wiper blade fastening element connected to the wiper lever is tiltable about the longitudinal axis (A5; A5') of the wiper lever.

## Revendications

1. Dispositif d'essuie-glace (10 ; 10'), comprenant :
- un entraînement d'essuie-glace (15) avec un arbre d'entraînement d'essuie-glace (20 ; 20') ;
- un levier d'essuie-glace (30 ; 30') connecté de manière solidaire en rotation à l'arbre d'entraînement d'essuie-glace (20 ; 20'), qui effectue au moyen de l'entraînement d'essuie-glace (15) des mouvements d'oscillation autour de l'arbre d'entraînement d'essuie-glace (20 ; 20') ; et
- un dispositif, notamment un dispositif de transmission (40 ; 40'), qui est connecté au levier d'essuie-glace (30 ; 30'), le dispositif (40 ; 40') pouvant être commandé par le biais d'éléments d'entraînement en relation avec l'arbre d'entraînement d'essuie-glace (20 ; 20') de telle sorte que le levier d'essuie-glace (30 ; 30') ou un élément de fixation de balai d'essuie-glace (50) connecté au levier d'essuie-glace (30 ; 30') puisse basculer autour d'un axe longitudinal du levier d'essuie-glace (A5 ; A5'),
- un premier levier de commande (60), qui s'étend essentiellement parallèlement au levier d'essuie-glace (30) ;
**caractérisé par**
- un deuxième levier de commande (70) qui est articulé d'une part à l'extrémité du premier levier de commande (60) éloignée de l'arbre d'entraînement d'essuie-glace (20) du levier d'essuie-glace (30), et qui est en liaison fonctionnelle d'autre part avec le dispositif (40) ;
- un troisième levier de commande (80) qui est articulé d'une part à l'extrémité du premier levier de commande (60) tournée vers l'arbre d'entraînement d'essuie-glace (20) du levier d'essuie-glace (30) ; et
le dispositif (40) pouvant être commandé au moyen des leviers de commande (60, 70, 80) entraînés par l'entraînement d'essuie-glace (15) de telle sorte que l'élément de fixation de balai d'essuie-glace (50) connecté au levier d'essuie-glace (30) puisse basculer autour de l'axe longitudinal du levier d'essuie-glace (A5).

2. Dispositif d'essuie-glace selon la revendication 1, dans lequel le dispositif (40) comprend une transmission à vis sans fin (43), au moyen de laquelle des mouvements du deuxième levier de commande (70) peuvent être convertis de telle sorte que le levier d'essuie-glace (30) ou l'élément de fixation de balai d'essuie-glace (50) connecté au levier d'essuie-glace (30) puisse basculer autour de l'axe longitudinal du levier d'essuie-glace (A5).

3. Dispositif d'essuie-glace (10') selon la revendication 1, dans lequel le dispositif (40') est disposé radialement sur l'arbre d'entraînement d'essuie-glace (20'), et le levier d'essuie-glace (30') est connecté au dispositif de transmission (40') de telle sorte que le levier d'essuie-glace (30') puisse basculer autour de son axe longitudinal (A5').

4. Dispositif d'essuie-glace (10') selon la revendication 3, dans lequel les éléments d'entraînement comprennent une roue à denture hélicoïdale (47') qui est soit en liaison fonctionnelle avec l'arbre d'entraînement d'essuie-glace (20') ou en liaison fonctionnelle avec un entraînement séparé (M), et dans lequel la roue à denture hélicoïdale (47') vient en prise dans un engrenage à vis sans fin (43') qui est connecté axialement au levier d'essuie-glace (30') par le biais d'une partie articulée (49).

5. Dispositif d'essuie-glace (10 ; 10') selon l'une quelconque des revendications 1 à 4, dans lequel le dispositif (40 ; 40') comprend un engrenage à vis sans fin (43 ; 43') au moyen duquel des mouvements des éléments d'entraînement peuvent être convertis de telle sorte que le levier d'essuie-glace (30 ; 30') ou l'élément de fixation de balai d'essuie-glace connecté au levier d'essuie-glace puisse basculer autour de l'axe longitudinal du levier d'essuie-glace (A5 ; A5').
